# EUROPEAN PATENT APPLICATION

(11) **EP 1 950 246 A1**
(43) Date of publication of application: **30.07.2008**
(21) Application number: 06832480.5
(22) Date of filing: 02.11.2006
(51) Int. Cl.: C08L 65/00, C08J 7/04, C08L 101/12, H01B 1/20, H01B 5/14, H01H 13/712

(54) **CONDUCTIVE RESIN COMPOSITION, CONDUCTIVE FILM COMPRISING THE SAME, AND RESISTIVE-FILM SWITCH EMPLOYING THE SAME**

(30) Priority: 16.11.2005 JP 2005331300
(71) Applicant: Nagase ChemteX Corporation, Osaka-shi, Osaka 550-8668 (JP)
(72) Inventor: MORITA, Yoshiyuki, Tatsuno-shi, Hyogo, 679-4124 (JP); CHIKUSA, Yasuo, Tatsuno-shi, Hyogo, 6794124 (JP); MIYANISHI, Kyoko, Tatsuno-shi, Hyogo, 6794124 (JP)
(74) Representative: Arth, Hans-Lothar
(86) International application number: PCT/JP2006/322427
(87) International publication number: WO 2007/058119

(57) **Abstract**

The present invention provides a conductive resin composition that comprises a complex of poly(3,4-dialkoxythiophene) and a polyanion, wherein the complex has a conductivity of 0.30 S/cm or more. This composition is preferably used for production of a conductive film having a conducting layer made of the composition, and the resulting conductive film is preferably used in a resistive-type film switch.

## Description

### Technical Field

The present invention relates to a conductive resin composition that can be preferably used in a resistive-type film switch, a conductive film formed by the use of the conductive resin composition, and a resistive-type film switch comprising the conductive film.

### Background Art

As resistive-type film switches, touch screens are commonly used.

Touch screens are used as display screens of display devices such as liquid crystal displays, cathode-ray tubes, and electroluminescence (EL) displays. Touch screens are one type of resistive-type film switches for two-dimensional information. A touch screen is designed such that, for example, when any point on the screen surface is pressed with a finger, a tip of a pen, or the like, the touch screen calculates the touched position based on the value of resistance that can be obtained from the distance between the position of the pressed point (connection spot) and the position of an electrode (e.g., a silver electrode) formed at a predetermined position of the touch screen and can output the calculated touched position to a computer device as an electric signal.

Recently, with the spread and development of portable information terminals and the like, the excellent man-machine interface capabilities during data input of the above-described touch screens have been appreciated, and the touch screens are therefore being used in various applications including electronic organizers, Personal Digital Assistances (PDAs), cellular phones, PHSs, electronic desk calculators, watches, GPSs, ATM systems used by the banking industry, vending machines, and Point of Sales Systems (POS systems). Among the touch screens, especially resistive touch screen type film switches can be used as various switches. The resistive touch screen type film switches generally have a structure in which a conductive transparent film and a conductive transparent substrate are disposed facing each other with an insulative spacer sandwiched therebetween. When any portion of this transparent film is pressed with a finger, a tip of a pen, or the like, the transparent film is bent and partially makes contact with the transparent substrate. As a result, electrical connection is performed, and thus, a signal or the like is output.

Conventionally, in many cases, polyethylene terephthalate (PET) films having an indium tin oxide (ITO) conducting layer have been used as transparent films for use in the touch screens. When such a PET film having an ITO conducting layer is deformed by pressing, there is a risk that repeated deformations may cause a breakage of the ITO layer. This is because ITO itself, which is a kind of ceramic, has poor flexibility. As described above, prolonged and repeated use causes brittle fracturing of the ITO layer and thus an increase in the resistance, which results in the problem of quality deterioration. Moreover, the ITO conducting layer is usually formed on the entire surface of the PET film by a method such as sputtering, and a complicated technique such as photolithography is required for patterning of the ITO layer. Furthermore, complicated process would be required. Namely, it is necessary to cover a portion where a wiring pattern is formed with a photoresist, a solder resist, an insulating paste, an insulating film, or the like to form an insulating portion.

In order to overcome the foregoing problems, WO 96/39707 proposes that a covering layer formed from a mixture of a conductive polymer and a non-conductive polymer is further disposed over the ITO conducting layer. With such a structure, the covering layer avoids an increase in the resistance of the ITO conducting layer even when a brittle fracture of the ITO conducting layer occurs because of prolonged and repeated use. In this case, however, there is a problem in that formation of the covering layer entails considerable cost.

Japanese Laid-Open Patent Publication Nos. H7-219697 and 2000-123658 propose conductive films in which a polymer layer containing conductive minute particles containing ITO and the like as main components is formed instead of the ITO conducting layer. Thus, the conductive films are capable of achieving a low surface resistivity However, when a touch screen is formed using such a conductive film, light is diffusely reflected from the surface of the touch screen, resulting in a problem in that the touch screen becomes hard to see.

Moreover, since indium, which is a raw material of ITO, is a rare metal, and also there has recently been a growing demand for indium for use in transparent electrodes, the price of indium is now rising.

In view of the disadvantages in performance and cost of the ITO conducting layer as described above, research has been conducted on conductive films containing a conductive polymeric film as a conducting layer that can replace the ITO conducting layer. However, the conductive films containing a conductive polymeric film layer have a problem of having a high surface resistivity when compared to that of conductive films containing an ITO conducting layer. Thus, various studies have been conducted to develop a conductive film containing a conductive polymeric film layer and having a low surface resistivity.

Japanese Laid-Open Patent Publication No. 2002-60736 proposes an antistatic, conductive coating agent containing a polythiophene derivative, a water-soluble compound, and an aqueous dispersion of a self-emulsifiable polyester resin. However, the polythiophene derivative described in this publication has insufficient conductivity. Furthermore, when a thin film formed on a substrate by using this coating agent is held under hot and humid conditions for a long period of time, there are cases where the surface resistivity of the thin film increases. When a thin film is used in touch screens, it is preferable that the thin film can offer high reliability even with respect to environmental changes such as high temperatures and high humidity. Therefore, a further improved thin film is desired.

Japanese Laid-Open Patent Publication No. 2005-146259 proposes a conductive coating agent at least containing a polythiophene derivative, a water-soluble organic compound, a dopant, and a water-soluble epoxy monomer. However, a conductive film obtained by using this conductive coating agent has a relatively high surface resistivity. Conductive films for use in touch screens are desired to have an even lower surface resistivity.

It is important that conductive films for use in resistive-type film switches such as touch screens have excellent transparency, conductivity, connection when a load is applied (i.e., when a predetermined portion of the conductive films is pressed), and adhesion to a substrate made of glass, plastics, or the like. Especially, it is important that the films have a low surface resistivity. However, a conductive resin composition that is capable of forming a conductive film having all of these properties is not provided at the present time.

### Disclosure of Invention

The inventors of the present invention conducted in-depth studies to solve the foregoing problems and found that a conductive film having optimum capabilities for production of a resistive-type film switch can be obtained by the use of a conductive resin composition containing a complex of poly(3,4-dialkoxythiophene) and a polyanion, the complex having a conductivity of 0.30 S/cm or more, and thus, the present invention was achieved.

A conductive resin composition of the present invention comprises a complex of poly(3,4-dialkoxythiophene) and a polyanion, wherein the complex has a conductivity of 0.30 S/cm or more.

In one embodiment, the complex of poly(3,4-dialkoxythiophene) and a polyanion is produced by a method comprising the step of polymerizing 3,4-dialkoxythiophene in the presence of the polyanion by using an oxidizing agent in an aqueous solvent.

A conductive film of the present invention comprises a conducting layer formed on a transparent substrate, wherein the conducting layer is formed by the use of the conductive resin composition.

A resistive-type film switch of the present invention comprises a first conductive member having a first conducting layer formed on a transparent substrate, a second conductive member having a second conducting layer formed on a substrate, and an insulative spacer, wherein the first conducting layer is made of a thin film formed from the conductive resin composition, the insulative spacer is provided on a part of the second conducting layer, and the first conducting layer and the second conducting layer are disposed facing each other.

As described above, the present invention provides a conductive resin composition containing a complex of poly(3,4-dialkoxythiophene) and a polyanion as a conducting component, the complex having a conductivity of 0.30 S/cm or more. When a conductive thin film is formed by applying this composition onto the surface of a substrate (e.g., a film) made of glass, plastics, or the like, a laminated product (e.g., a conductive film) having excellent transparency and conductivity can be obtained. The thin film has excellent adhesion to the substrate and has a low surface resistivity. By selecting the type of the substrate, a film having excellent flexibility can be obtained. This conductive film can be produced easily at low cost and can be mass-produced. When this conductive film is used in a resistive-type film switch, the resistive-type film switch shows excellent connection when a predetermined portion thereof is pressed. Even when this conductive film is held under hot and humid conditions for a long period of time, an increase in the surface resistivity is effectively suppressed. Therefore, such a conductive film is preferably used in resistive-type film switches such as touch screens.

The present invention also provides a high-quality resistive-type film switch that has the above-described conductive film, that has a high conductivity, and that does not deteriorate even after repeated use.

### Brief Description of the Drawings

Fig. 1 is a schematic cross-sectional view showing an example of a resistive-type film switch of the present invention.
Figs. 2(a) and 2(b) are schematic plan views showing an example of a first conductive member and an example of a second conductive member, respectively, of a resistive-type film switch of the present invention.

### Best Mode for Carrying Out the Invention

Hereinafter, a conductive resin composition of the present invention, a conductive film obtained by the use of the composition, and a resistive-type film switch obtained by the use of the conductive film will be described successively.

### (I) Conductive resin composition

The conductive resin composition of the present invention comprises a complex of poly(3,4-dialkoxythiophene) and a polyanion, and as necessary, an organic compound, a conductivity improver, a cross-linking agent, a coating property improver, a solvent, and other components.

### (I.1) Complex of poly(3,4-dialkoxythiophene) and polyanion

The complex of poly(3,4-dialkoxythiophene) and a polyanion can be obtained by polymerizing 3,4-dialkoxythiophene in the presence of the polyanion by using an oxidizing agent. This complex has a conductivity of 0.30 S/cm or more, preferably 0.4 S/cm or more, and usually 0.6 to 30 S/cm. When the conductivity of the complex is less than 0.30 S/cm, the resulting conductive resin composition has a high surface resistivity, and thus, good conductivity cannot be obtained. Since the complex of poly(3,4-dialkoxythiophene) and a polyanion is preferably prepared in the form of an aqueous dispersion, the conductivity of this complex is measured specifically by the process of applying an aqueous dispersion containing the complex onto a substrate and drying the coated portion, and measuring the conductivity of the resultant thin film on the substrate, as described in examples described later.

The complex of poly(3,4-dialkoxythiophene) and a polyanion is obtained in the form of an aqueous dispersion and, for example, by polymerizing 3,4-dialkoxythiophene represented by a formula (1) below: 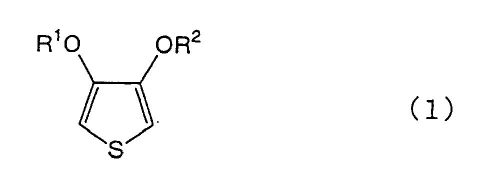 (wherein R¹ and R² are independently hydrogen or a C₁₋₄ alkyl group, or together form a C₁₋₄ alkylene group, which may optionally be substituted), wherein the polymerization is performed in the presence of the polyanion by using an oxidizing agent, such as peroxodisulfuric acid, in an aqueous solvent.

In the above-described 3,4-dialkoxythiophene, preferable examples of the C₁₋₄ alkyl groups represented by R¹ and R² include a methyl group, an ethyl group, and a n-propyl group. Examples of the C₁₋₄ alkylene group formed by R¹ and R² together include a 1,2-alkylene group and a 1,3-alkylene group, preferably a methylene group, a 1,2-ethylene group, and a 1,3-propylene group. Among these, the 1,2-ethylene group is particularly preferable. The C₁₋₄ alkylene group may optionally be substituted, and examples of the substituent include a C₁₋₁₂ alkyl group and a phenyl group. Examples of the substituent C₁₋₄ alkylene group include a 1,2-cyclohexylene group and a 2,3-butylene group. The 1,2-alkylene group that can be formed by R¹ and R² together and that may be substituted with a C₁₋₁₂ alkyl group is a typical example of the alkylene groups. This 1,2-alkylene group can be derived from 1,2-dibromoalkanes that can be obtained by bromination of an α-olefin such as ethene, propene, hexene, octene, decene, dodecene, or styrene.

Examples of the polyanion used in the above-described method include polycarboxylic acids such as polyacrylic acid, polymethacrylic acid and polymaleic acid; and polysulfonic acids such as polystyrenesulfonic acid and polyvinylsulfonic acid. Among these, polystyrenesulfonic acid is particularly preferable. The polycarboxylic acids may be copolymers of a vinyl carboxylic acid and another polymerizable monomer, and the polysulfonic acids may be copolymers of a vinyl sulfonic acid and another polymerizable monomer. Examples of the polymerizable monomer include acrylates and styrene. The number average molecular weight of the polyanion is preferably in the range from 1,000 to 2,000,000, more preferably 2,000 to 500,000, and most preferably 10,000 to 200,000. The amount of the polyanion used is preferably in the range from 50 to 3,000 parts by weight, more preferably 100 to 1,000 parts by weight, and most preferably 150 to 500 parts by weight with respect to 100 parts by weight of the thiophene.

The solvent used in the above-described method is an aqueous solvent, and water is particularly preferable. Alternatively, water that contains a water-miscible solvent such as alcohols (e.g., methanol, ethanol, 2-propanol, and 1-propanol), acetone, and acetonitrile can be used.

In the method of the present invention, examples of the oxidizing agent used in the polymerization reaction of 3,4-dialkoxythiophene include, but are not limited to, peroxodisulfuric acid, sodium peroxodisulfate, potassium peroxodisulfate, ammonium peroxodisulfate, inorganic salts of ferric oxide, organic salts of ferric oxide, hydrogen peroxide, potassium permanganate, potassium dichromate, perboric acid alkaline salts, and copper salts. Among these, peroxodisulfuric acid, sodium peroxodisulfate, potassium peroxodisulfate, and ammonium peroxodisulfate are most preferable. The amount of the oxidizing agent used for the reaction is preferably in the range from 1 to 5 equivalents, and more preferably 2 to 4 equivalents per 1 mol of the thiophene.

Poly(3,4-dialkoxythiophene) is produced by a polymerization reaction in which the above-described materials are used. This poly(3,4-dialkoxythiophene) is considered to be doped with a polyanion, and it is referred to as "a complex of poly(3,4-dialkoxythiophene) and a polyanion" or simply "a complex" in this specification.

There is no particular limitation regarding the content of the complex of poly(3,4-dialkoxythiophene) and a polyanion in the conductive resin composition of the present invention. The content of the complex is preferably 1 to 99 wt% and more preferably 20 to 80 wt% so that sufficient conductivity is ensured. This content is expressed in terms of solid content based on the solid content of the composition as a whole. This holds for the organic compound, the conductivity improver, the cross-linking agent, and the coating property improver, which will be described later. This also holds for the other components. With a complex content outside the above-described range, the resultant thin film made of the conductive resin composition may have a high surface resistivity, and thus, good conductivity may not be obtained. Furthermore, sufficient connection may not be obtained when a resistive-type film switch is formed and a predetermined portion thereof is pressed.

### (I.2) Organic compound

There is no particular limitation regarding the organic compound that can be contained in the conductive resin composition of the present invention, and any organic compound appropriately selected according to the intended purpose can be used. For example, water-soluble polyester polymers, water-soluble polyurethane polymers, water-soluble polyacrylic polymers, water-dispersible polyester polymers, water-dispersible polyurethane polymers, and water-dispersible polyacrylic polymers can be preferably used. Among these, water-soluble polyester polymers, water-dispersible polyester polymers, and the like are preferable. These compounds may be used alone or in combination of two or more.

There is no particular limitation regarding the content of the organic compound in the composition. However, the content of the organic compound is 1 wt% or more, preferably 5 wt% or more, and usually 1 to 75 wt%. When the composition contains a solvent such as water, the organic compound is dissolved or dispersed in the solvent.

### (I.3) Conductivity improver

There is no particular limitation regarding the conductivity improver that can be contained in the composition of the present invention, and any conductivity improver appropriately selected according to the intended purpose can be used. It is advantageous to use the conductivity improver in that the surface resistivity of a conductive film formed by using the composition of the present invention can be decreased even more.

There is no particular limitation regarding the type of the conductivity improver, and the type of the conductivity improver can be appropriately selected according to the intended purpose. Examples of the conductivity improver include ethylene glycol, diethylene glycol, propylene glycol, trimethylene glycol, 1,4-butanediol, 1,5-pentanediol, 1,6-hexanediol, neopentylglycol, catechol, cyclohexanediol, cyclohexanedimethanol, glycerin, dimethylsulfoxide, N-methylformamide, N,N-dimethylformamide, isophorone, propylene carbonate, cyclohexanone, γ-butyrolactone, and diethylene glycol monoethyl ether. Among these, ethylene glycol, dimethylsulfoxide, and N-methylformamide are preferable. The conductivity improvers may be used alone or in combination of two or more.

There is no particular limitation regarding the content of the conductivity improver in the conductive resin composition, and the content thereof can be appropriately selected according to the intended purpose. The content of the conductivity improver is preferably 1 wt% or more, more preferably 2 to 4 wt%, and usually 1 to 10 wt%. When the composition contains a solvent such as water, the conductivity improver is present in the solvent in a dissolved or dispersed state.

### (I.4) Cross-linking agent

The cross-linking agent has an effect of increasing the strength of the entire thin film formed on a substrate by cross-linking the above-described organic compound and other components in the composition.

There is no particular limitation regarding the type of such a cross-linking agent, and the type of the cross-linking agent can be appropriately selected according to the intended purpose. Examples of the cross-linking agent include water-soluble acrylic monomers, water-soluble acrylic oligomers, water-soluble acrylic polymers, water-soluble melamine monomers, water-soluble melamine oligomers, water-soluble melamine polymers, water-soluble epoxy oligomers, and water-soluble epoxy polymers. Among these, water-soluble acrylic monomers and water-soluble melamine monomers are preferable. These cross-linking agents may be used alone or in combination of two or more.

There is no particular limitation regarding the content of the cross-linking agent in the conductive resin composition, and the content thereof can be appropriately selected according to the intended purpose. The content of the cross-linking agent is preferably 0.05 wt% or more and usually 1 to 75 wt%. When the composition contains a solvent such as water, the cross-linking agent is present in the solvent in a dissolved or dispersed state.

### (I.5) Coating property improver

When the composition contains a solvent, for example, when the composition is an aqueous dispersion, the coating property improver has a function of facilitating application of the aqueous dispersion to the surface of a substrate.

There is no particular limitation regarding the coating property improver, and any coating property improver appropriately selected according to the intended purpose can be used. Examples of the coating property improver include water-soluble acrylic copolymers, silicone-modified water-soluble acrylic polymers, polyether-modified water-soluble dimethyl siloxanes, and fluorine -modified polymers. Among these, polyether-modified water-soluble dimethyl siloxanes are preferable. The coating property improvers may be used alone or in combination of two or more.

There is no particular limitation regarding the content of the coating property improver in the conductive resin composition, and the content thereof can be appropriately selected according to the intended purpose. The content of the coating property improver is preferably 0.01 wt% or more and usually 0.01 to 10 wt%. When the composition contains a solvent such as water, the coating property improver is present in the solvent in a dissolved or dispersed state.

### (1.6) Other components

There is no particular limitation regarding the other components that can be contained in the composition, and any component appropriately selected from known additives and the like can be used. Examples of the other components include ultraviolet absorbers, antioxidants, polymerization inhibitors, surface modifiers, defoamers, plasticizers, antimicrobial agents, surfactants, and metal microparticles. The above-described other components may be used alone or in combination of two or more.

### (I.7) Solvent

There is no particular limitation regarding the type of the solvent, and the type of the solvent can be appropriately selected according to the intended purpose. Examples of the solvent include water, methanol, ethanol, 1-propanol, 2-propanol, 1-butanol, acetone, methyl ethyl ketone, methyl butyl ketone, methyl acetate, ethyl acetate, isopropyl acetate, butyl acetate, methyl propionate, acetonitrile, tetrahydrofuran, and dioxane. Among these, water and ethanol are preferable. The solvents may be used alone or in combination of two or more.

### (1.8) Conductive resin composition

As described above, the conductive resin composition of the present invention contains a complex of poly(3,4-dalkoxythiophene) and a polyanion, and as necessary, an organic compound, a conductivity improver, a cross-linking agent, a coating property improver, a solvent, and other components. This composition is usually prepared in the form of a dispersion containing water or water and an organic solvent. For example, the above-described complex is prepared in the form of an aqueous dispersion, and the above-described various components such as an organic compound, a conductivity improver, and a cross-linking agent are added to the complex as necessary, and thus, a conductive resin composition in the form of an aqueous dispersion can be obtained.

### (II) Conductive film

The conductive film of the present invention has a conducting layer on the transparent substrate, wherein the conducting layer is made of a thin film formed by using the above-described conductive resin composition. This conductive film can be used in various electronic devices for which conductivity and transparency are required, such as the resistive-type film switch described later.

### (II.1) Transparent substrate

There is no particular limitation regarding the transparent substrate that can be used in the present invention as long as the substrate is made of a transparent material. The type of the material and the form, structure, size, thickness and the like of the substrate can be appropriately selected according to the intended purpose. It should be noted that "transparent" as used in this specification includes "colored and transparent", "colorless and translucent", "colored and translucent", and the like in addition to "colorless and transparent".

Preferable examples of the material of the transparent substrate include resin and glass. There is no particular limitation regarding the resin, and any resin appropriately selected according to the intended purpose can be used. Examples of the resin include a polyethylene terephthalate resin, a polybutylene terephthalate resin, a polyethylene naphthalate resin, a polyvinylchloride resin, a polyethersulfone resin, a polycarbonate resin, a polystyrene resin, a polyimide resin, a polyetherimide resin, a polyvinyl acetate resin, a polyvinylidene chloride resin, a polyvinylidene fluoride resin, a polyvinyl alcohol resin, a polyvinyl acetal resin, a polyvinyl butyral resin, a polyacrylonitrile resin, a polyolefin resin, a polystyrene resin, a polyamide resin, a polybutadiene resin, cellulose acetate, cellulose nitrate, and an acrylonitrile-butadiene-styrene copolymer resin. These resins may be used alone or in combination of two or more. For example, when this conductive film is used in the resistive-type film switch, which will be described later, a polyethylene terephthalate resin (PET) is preferable among these resins in that it has superior transparency and flexibility.

The transparent substrate is usually in the form of a film or a sheet. However, the transparent substrate may be in the form of a plate. The transparent substrate may be formed of, for example, a single part, or may be formed of two or more parts, in which case the transparent substrate preferably has a laminated structure or the like. For example, a laminated product made of two types of resin films can be used.

### (II.2) Production of conductive film

There is no particular limitation regarding the production method of the conductive film of the present invention. Usually, the above-described conductive resin composition in a liquid or paste form such as an aqueous dispersion is applied to (e.g., coated on) the surface of the above-described transparent substrate and dried, thereby forming a conducting layer, and thus, the conductive film of the present invention can be obtained.

There is no particular limitation regarding the application method, and any application method appropriately selected according to the intended purpose can be employed. For example, coating techniques and printing techniques can be preferably employed. The application methods may be employed alone or in combination of two or more.

There is no particular limitation regarding the coating techniques, and any technique appropriately selected from those commonly used in the art can be employed. Examples of the coating techniques include spin coating, roller coating, bar coating, dip coating, gravure coating, curtain coating, die coating, spray coating, doctor blade coating, and kneader coating.

There is no particular limitation regarding the printing techniques, and any technique appropriately selected from those commonly used in the art can be employed. Examples of the printing techniques include screen printing, spray printing, inkjet printing, relief printing, intaglio printing, and lithography.

In the conductive film of the present invention, there is no particular limitation regarding the thickness of the thin film (the conducting layer) formed by using the conductive resin composition, and the thickness can be appropriately selected according to the intended purpose. For example, the thickness is preferably 0.01 to 10 µm and more preferably 0.1 to 1 µm.

A conducting layer thickness of less than 0.01 µm may cause instability of the surface resistivity of the film, and a thickness exceeding 10 µm may result in poor adhesion to the transparent substrate.

There is no particular limitation regarding the surface resistivity of the conductive film of the present invention. It is possible to produce a conductive film having a desired surface resistivity according to the intended purpose by appropriately adjusting the components of the composition to be used, the thickness of the conducting layer to be formed, and the like. For example, when the conductive film is used in the resistive-type film switch, which will be described later, the surface resistivity is preferably 2,000 Ω/□ or less and more preferably 1,500 Ω/□ or less.

A surface resistivity of the conductive film exceeding 2,000 Ω/□ may cause a decrease in the connection of the resultant resistive-type film switch when a predetermined portion of the film is pressed.

The surface resistivity can be measured in accordance with, for example, JIS K6911, or can be measured conveniently with a commercially available surface resistivity meter.

The conductive film of the present invention obtained in this manner has excellent transparency and conductivity, and the conducting layer of the film has excellent adhesion to the substrate made of glass, plastics, or the like. Even when the conductive film is held under hot and humid conditions for a long period of time, an increase in the surface resistivity is effectively suppressed. Furthermore, this conductive film can be mass-produced in a desired form at low cost, and can be produced as a flexible film when the type of the substrate is properly selected. Therefore, as described later, the conductive film can be particularly preferably used in, for example, resistive-type film switches such as touch screens.

### (III) Resistive-type film switch

### (IIL 1) Structure of resistive-type film switch

Hereinafter, a structure of the resistive-type film switch of the present invention will be described by way of an example with reference to the drawings.

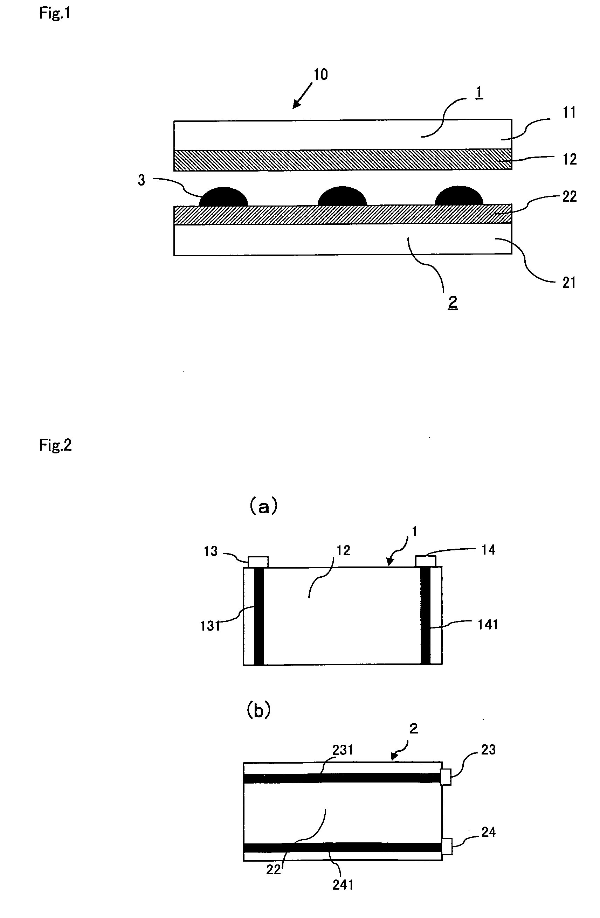

Fig. 1 is a schematic cross-sectional view showing an example of the resistive-type film switch of the present invention. As shown in Fig. 1, the resistive-type film switch 10 has a first conductive member 1 made of a conductive film in which a first conducting layer 12 is formed on a transparent substrate 11, a second conductive member 2 in which a second conducting layer 22 is formed on a substrate 21, and an insulative spacer 3. The insulative spacer 3 is formed on the second conducting layer 22. The first conductive member 1 and the second conductive member 2 are disposed such that the first conducting layer 12 of the first conductive member 1 and the second conducting layer 22 of the second conductive member 2 face each other with the insulative spacer 3 sandwiched therebetween, and the first conducting layer 12 and the second conducting layer 22 are positioned so as not to make contact with each other.

In the resistive-type film switch of this example, the first conducting layer 12 of the first conductive member 1 and the second conducting layer 22 of the second conductive member 2 are each connected to a power supply (not shown).

In the case where this resistive-type film switch is a touch screen, the surface (that is not in contact with the first conducting layer 12) of the transparent substrate 11 serves as a touch surface. When the touch surface is pressed with a finger, a tip of a pen, or the like, the first conductive member 1 is deformed, and the first conducting layer 12 at the pressed portion makes contact with the second conducting layer 22. As a result, electrical connection is performed at the point of contact, so that an electric signal outputs, and thus, the resistive-type film switch is actuated or driven.

By using this electric signal, the resistive-type film switch works as an input device.

Hereinafter, elements constituting the resistive-type film switch of the present invention and a resistive-type film switch using the elements will be described in detail.

Elements that constitute the resistive-type film switch are the first conductive member 1, the second conductive member, and the insulative spacer shown in Fig. 1.

### (III.2) First conductive member constituting resistive-type film switch

The first conductive member 1 constituting the resistive-type film switch of the present invention comprises the transparent substrate 11 and a conductive thin film (a first conducting layer) that is formed on the transparent substrate 11. As the first conductive member 1, the conductive film described in above section (II) is used. The conducting layer of this film is the first conducting layer 12.

Since the substrate 11 of the conductive film is used in the resistive-type film switch, the substrate 11 is required to be optically transparent. Furthermore, the substrate 11 is required to have flexibility and strength in order to obtain a resistive-type film switch that has sufficient flexibility and strength, wherein the resistive-type film switch includes a conductive film that is obtained by forming a conducting layer on the substrate 11.

For example, as described above, a film made of a polyethylene terephthalate (PET) resin having excellent transparency and flexibility is preferable.

For example, when the resistive-type film switch is a touch screen, the size of the transparent substrate 11 is preferably equal to or almost equal to that of the touch screen surface of the touch screen. As for the thickness of the transparent substrate, for example, when the resistive-type film switch is a touch screen, any thickness can be satisfactorily employed as long as sufficient mechanical strength and suitable flexibility are provided.

The first conductive member can be obtained by applying the conductive resin composition in a liquid or paste form such as an aqueous dispersion onto this transparent substrate 11 as described above and drying the composition, thereby forming a thin film (i.e., the first conducting layer 12).

The first conducting layer 12 may be formed on the entire surface or part of the surface of the transparent substrate 11. When the resistive-type film switch is a touch screen or the like, the latter case is advantageous in that a space in which an electrode or a wiring pattern is formed can be secured. On the contrary, in touch screens and the like, when a substrate with an ITO conducting layer formed on the entire surface thereof is employed, complicated and costly processing, such as the removal of the ITO conducting layer by etching and the covering of the ITO conducting layer with an insulating film or the like, is needed. In contrast, when the conducting layer is formed partially, such processing is no longer necessary, which is advantageous.

It is preferable that the first conductive member 1 has excellent optical transparency and also has flexibility. The flexibility of the first conductive member 1 allows the first conductive member 1 to be deformed when pressed and to partially make contact with the second conductive member 2 when pressed. There is no particular limitation regarding the degree of conductivity, or in other words, the resistivity or the like, and the degree of conductivity can be appropriately determined so as to achieve a required degree of conductivity according to the intended purpose. For example, the degree of conductivity can be determined to be within the same range as the resistivity of a transparent conducting layer in a commonly used touch screen.

It should be noted that the size of the first conductive member 1 when used in, for example, a touch screen is preferably equal to or almost equal to that of the touch screen surface of the touch screen.

### (III.3) Second conductive member constituting resistive-type film switch

The second conductive member 2 constituting the resistive-type film switch of the present invention comprises the substrate 21 and a conductive thin film (the second conducting layer 22) that is formed on the substrate 21. The material, color, form, structure, size, and the like of this substrate 21 are not particularly limited and can be appropriately selected according to the intended purpose.

As a specific material of the substrate 21, for example, glass, resin, and the like are preferable. This is because these materials have excellent hardness and facilitate the formation of the conducting layer on the surface of the substrate made of such materials.

Examples of the resin that can be used for the substrate 21 include rigid resins.

Examples of the rigid resins include an acrylic resin, a methacrylic resin, a rigid polyvinyl chloride resin, a polysulfone resin, a polyether sulfone resin, a polyether ether ketone resin, a polyethylene terephthalate resin, a polybutylene terephthalate resin, a polyethylene naphthalate resin, a polyacetal resin, a polyamide resin, a polyimide resin, a polyamide-imide resin, and a polymaleimide resin.

The substrate 21 may be optically opaque. However, transparent or translucent materials, especially transparent materials are preferably used depending on the intended purpose.

There also is no particular limitation regarding the form of the substrate 21, and the form thereof can be appropriately selected according to the intended purpose. For example, a plate form is preferable as the substrate 21 is used in liquid crystal displays and the like. The substrate 21 may be formed of, for example, a single part, or may be formed of two or more parts, in which case the substrate preferably has a laminated structure or the like. For example, a laminated product made of two types of resin films can be used.

There is no particular limitation regarding the size of the substrate 21, and the size thereof can be appropriately selected according to the intended purpose. For example, a size almost equal to that of the first conductive member 1 is employed.

There is no particular limitation regarding the material that can form the second conducting layer, and any material appropriately selected from conductive materials commonly used in the art can be employed. An example of such conductive materials is ITO. In addition to ITO, the above-described conductive resin composition of the present invention and the like can be used. The conducting layer made of the above-described ITO can be formed by a known thin film formation method such as evaporation or sputtering. When the conductive resin composition of the present invention is used, the conducting layer is formed on the substrate 21 by a process, such as an application method, similar to that for forming the above-described first conducting layer.

It is also possible to use a film having a structure similar to that of the above-described first conductive member 1 as the second conductive member 2. In this case, both of the first conductive member 1 and the second conductive member 2 have flexibility Therefore, these members can be designed and arranged to produce a switch having a curved surface. Thus, the degree of freedom in selecting the installation site and the design of the switch can be increased. Moreover, when a rigid material such as glass is not used, the resistive-type film switch can be made compact and lightweight, so that a resistive-type film switch having excellent portability can be advantageously obtained.

### (III.4) Insulative spacer

There is no particular limitation regarding the form, structure, material, size, and the like of the insulative spacer 3 used in the present invention, and any insulative spacer appropriately selected from those commonly used in the art can be employed. As the material of the insulative spacer, for example, an acrylic resin can be used. Examples of the form of the insulative spacer include a cylindrical form, a hemispherical form, and a rectangular parallelepiped form. This insulative spacer 3 is formed on the surface of the second conducting layer 22 that is formed on the substrate 21. Specifically, a method such as known photolithography technique can be employed for forming the insulative spacer 3.

### (III.5) Other parts

In addition to the above-described elements, the resistive-type film switch of the present invention may have other parts appropriately selected as necessary. There is no particular limitation regarding the other parts, and any part appropriately selected according to the intended purpose can be used. Examples of the other parts include an electrode, a land pattern, a wiring pattern, and a dot spacer.

There is no particular limitation regarding the material for forming the electrode, the land pattern, the wiring pattern, and the like as long as the material has conductivity. Also, there is no particular limitation regarding the form, structure, size, and the like of these parts. The above-mentioned material can be appropriately selected from known materials. Examples of the material include a polyester-based silver paste.

There is no particular limitation regarding the formation method of the electrode, the land pattern, the wiring patter, and the like, and any method appropriately selected from those commonly used in the art can be employed. Examples of the formation method include coating techniques and printing techniques.

There is no particular limitation regarding the material, form, structure, size, and the like of the dot spacer, and any dot spacer appropriately selected from known dot spacers can be used. Examples of the material used for the dot spacer include an acrylic resin. Examples of the form of the dot spacer include a cylindrical form, a semispherical form, and a rectangular parallelepiped form.

There is no particular limitation regarding the formation method of the dot spacer, and any method appropriately selected from those commonly used in the art can be employed. Examples of the formation method include photolithography.

Among the above-described other parts, the electrode is formed in contact with the first conducting layer 12 of the first conductive member 1 and the second conducting layer 22 of the second conductive member 2. The parts other than the electrode are formed on the second conducting layer 22.

### (III.6) Resistive-type film switch

As shown in Fig. 1, the resistive-type film switch of the present invention can be obtained by disposing the first conductive member 1 and the second conductive member 2 such that the first conducting layer 12 of the first conductive member 1 and the second conducting layer 22 of the second conductive member 2 face each other with the insulative spacer 3 sandwiched therebetween.

In the production process of this switch, usually, the insulative spacer 3 is first formed on the second conducting layer 22 of the second conductive member 2 by a method such as photolithography. Then, a first electrode and a second electrode are formed on a part of the surface of the first conducting layer 12 of the first conductive member 1 and the second conducting layer 22 of the second conductive member 2, respectively. The first conductive member 1 and the second conductive member 2 are disposed facing each other, and thus, a resistive-type film switch is obtained. For example, as shown in Figs. 2(a) and 2(b), in case where a first conductive member 1 and a second conductive member 2 having the same rectangular shape are prepared, first electrodes 131 and 141 are formed in a band in the vicinity of the short sides in the width direction of the first conductive member 1. Second electrodes 231 and 241 are formed in a band in the vicinity of the side edges (long sides) in the longitudinal direction of the second conductive member 2. The first and second electrodes can be formed using a material having conductivity, and there is no particular limitation regarding the material and the form of the electrodes. For example, the first and second electrodes are formed by applying a silver paste in a band or affixing a copper thin film. Tab electrodes 13, 14, 23, and 24 shown in Fig. 2 are provided for leading out the wiring, and these tab electrodes are formed in contact with the corresponding first or second electrodes. Then, the first conductive member 1 and the second conductive member 2 are attached together in such a manner that the band-shaped first and second electrodes of the conductive members are orthogonal to each other and these electrodes are not in electrical contact with one another.

The thus obtained resistive-type film switch of the present invention has excellent transparency and excellent conductivity of the conducting layer, shows excellent connection when a predetermined portion of the resistive-type film switch is pressed, and also has excellent flexibility. Furthermore, even when the resistive-type film switch is held under hot and humid conditions for a long period of time, an increase in the surface resistivity of the conducting layer is effectively suppressed. Further still, the resistive-type film switch can be mass-produced in a desired form at low cost. Therefore, the resistive-type film switch can be preferably used in various fields. For example, the resistive-type film switch can be particularly preferably used in touch screens and membrane switches.

### Examples

Hereinafter, the present invention will be described by way of examples. However, the present invention is not limited to the examples.

The term "parts" in the examples and a comparative example below refers to "parts by weight", and when a solution or a dispersion is used, the amount of materials contained therein is expressed in terms of solid content. In the following examples, the conductivity of a complex of poly(3,4-dialkoxythiophene) and a polyanion was measured by the following method. Also in the comparative example, the conductivity of a polyanion was measured by the same method.

### Method for measuring the conductivity of a complex of poly(3,4-dialkoxythiophene) and a polyanion

An aqueous dispersion of a complex of poly(3,4-dialkoxythiophene) and a polyanion was applied onto a substrate having a smooth surface and dried. The conductivity of the thus formed thin film having a thickness of 0.15 µm was measured with Loresta-GP (MCP-T600) manufactured by Mitsubishi Chemical Corporation.

### Example 1

As an aqueous dispersion of a complex of poly(3,4-ethylenedioxythiophene) and polystyrenesulfonic acid, Baytron PH500 (hereinafter referred to as an aqueous dispersion (A)) manufactured by H.C. Starck was used. The conductivity of this complex was measured to be 0.79 S/cm. To 10.4 parts (in terms of solid content) of the aqueous dispersion (A), 3.0 parts (in terms of solid content) of an aqueous dispersion of a polyester resin (Gabsen ES-210 manufactured by Nagase ChemteX Corporation), 1.0 part (in terms of solid content) of a melamine cross-linking agent (Sumitex Resin M-3 manufactured by Sumitomo Chemical Co., Ltd.), 20 parts of N-methylformamide, a small amount of a surfactant, a small amount of a leveling agent, and proper amounts of water and denatured ethanol were added. The mixture was stirred for one hour and thereafter filtrated with a 400-mesh sieve made of SUS, and thus, a coating agent was obtained.

Table 1 shows the components of this coating agent. Table 1 also shows the components of coating agents of Examples 2 to 5 and Comparative Example 1, which will be described below.

### Example 2

The same operation as in Example 1 was performed except that the amount of the aqueous dispersion (A) was changed to 10.7 parts (in terms of solid content) and the amount of the aqueous dispersion of a polyester resin was changed to 9.0 parts (in terms of solid content), and thus, a coating agent was obtained.

### Example 3

As an aqueous dispersion of a complex of poly(3,4-ethylenedioxythiophene) and polystyrenesulfonic acid, Baytron PH510 (hereinafter referred to as an aqueous dispersion (B)) manufactured by H.C. Starck was used. The conductivity of this complex was measured to be 0.67 S/cm. The same operation as in Example 1 was performed except that this aqueous dispersion was used and the amount of the melamine cross-linking agent was 3.0 parts, and thus, a coating agent was obtained.

### Example 4

As an aqueous dispersion of a complex of poly(3,4-ethylenedioxythiophene) and polystyrenesulfonic acid, Baytron PHC V4 (hereinafter referred to as an aqueous dispersion (C)) manufactured by H.C. Starck was used. The conductivity of this complex was measured to be 0.69 S/cm. The same operation as in Example 1 was performed except that the aqueous dispersion (A) was replaced by this aqueous dispersion (C), the aqueous dispersion of a polyester resin was replaced by 6.0 parts (in terms of solid content) of an aqueous dispersion of a polyurethane resin (SUPERFLEX 300 manufactured by Dai-ichi Kogyo Seiyaku Co., Ltd.), and the amount of the melamine cross-linking agent was changed to 2.0 parts, and thus, a coating agent was obtained.

### Example 5

The same operation as in Example 1 was performed except that the aqueous dispersion (A) was replaced by the aqueous dispersion (C), the aqueous dispersion of a polyester resin was replaced by 3.0 parts (in terms of solid content) of an aqueous dispersion of a polyacrylic resin (JURYMER SEK-301 manufactured by Nihon Junyaku Co., Ltd.), and the amount of the melamine cross-linking agent was changed to 3.0 parts, and thus, a coating agent was obtained.

### Comparative Example 1

The same operation as in Example 1 was performed except that the aqueous dispersion (A) was replaced by an aqueous solution containing a polyaniline having a conductivity of 8.0 × 10-⁶ S/cm (aqua PASS-01x manufactured by Mitsubishi Rayon Co., Ltd.), the amount of the aqueous dispersion of a polyester resin was changed to 5.0 parts (in terms of solid content), and the amount of the melamine cross-linking agent was changed to 3.0 parts, and thus, a coating agent was obtained.

**Table 1**

| | Aqueous dispersion of conductive resin | | | Aqueous dispersion of organic compound (parts) | | Melamine cross-linking agent (parts) | N-methylform amide | Other components |
|---|---|---|---|---|---|---|---|---|
| | Resin | Amount (parts)^{*1} | Conductivity (S/cm) | Type of resin | Amount (parts)^{*1} | | | |
| Ex. 1 | 3,4-Ethylenedioxythiophene (Aqueous dispersion A) | 10.4 | 0.79 | Polyester resin | 3.0 | 1.0 | 20 | Surfactant, leveling agent, water, and ethanol |
| Ex. 2 | 3,4-Ethylenedioxythiophene (Aqueous dispersion A) | 10.7 | 0.79 | Polyester resin | 9.0 | 1.0 | 20 | Surfactant, leveling agent, water, and ethanol |
| Ex. 3 | 3,4-Ethylenedioxythiophene (Aqueous dispersion B) | 10.4 | 0.67 | Polyester resin | 3.0 | 3.0 | 20 | Surfactant, leveling agent, water, and ethanol |
| Ex. 4 | 3,4-Ethylenedioxythiophene (Aqueous dispersion C) | 10.4 | 0.69 | Polyurethane resin | 6.0 | 2.0 | 20 | Surfactant, leveling agent, water, and ethanol |
| Ex. 5 | 3,4-Ethylenedioxythiophene (Aqueous dispersion C) | 10.4 | 0.69 | Polyacrylic resin | 3.0 | 3.0 | 20 | Surfactant, leveling agent, water, and ethanol |
| Com.Ex. 1 | Polyaniline | 10.4 | 1.0 × 10⁻⁸ | Polyester resin | 5.0 | 3.0 | 20 | Surfactant, leveling agent, water, and ethanol |

| | | | | | | | | |
|---|---|---|---|---|---|---|---|---|
| *1: In terms of solid content. | | | | | | | | |

### Performance evaluation

According to the processes in sections (1) to (8) below, conductive films and touch screen specimens were obtained by the use of the coating agents (conductive compositions) of the above-described examples and comparative example and evaluated.

### (1) Preparation of conductive films

Each of the coating agents obtained in Examples 1 to 5 and Comparative Example 1 was applied with either of a wire bar No. 8 (for preparing a film having a thickness of 12 µm in a wet condition) or a wire bar No. 16 (for preparing a film having a thickness of 24 µm in a wet condition) to a surface of a substrate by bar coating, and thus, a thin film was formed on the substrate. As the substrate, PET film (70 mm × 100 mm; 100 µm thick; Lumirror T type manufactured by Toray Industries, Inc.) was used. Then, the resultant thin films were placed in an oven at 130°C and cured for 15 minutes, and thus, conductive films having conductive thin films on the surfaces thereof were obtained.

### (2) Evaluation of the total light transmission and the haze value

The total light transmission and the haze value of the conductive films obtained in above section (1) were measured. The total light transmission and the haze value were measured with a haze computer HGM-2B manufactured by SUGA Test Instruments Co., Ltd. according to JIS K7150. The total light transmission of the PET films used as the substrates was 87.8%, and the haze value was 1.9%.

### (3) Evaluation of the surface resistivity and the haze value

The surface resistivity of the conductive films obtained in above section (1) was measured with Loresta-GP (MCP-T600) manufactured by Mitsubishi Chemical Corporation according to JIS K6911.

### (4) Evaluation of the adhesion

The surfaces of the conductive films obtained in above section (1) were cut into a grid pattern with a cutter knife. The depth of the cut was such that the cutter knife penetrated the conductive thin films to touch the PET films, i.e., the substrates. A cellophane tape was adhered to the conductive films in which the cut was made and then peeled of, and an evaluation was performed based on the following evaluation criteria:

| | |
|---|---|
| Conductive thin film was not separated at all | ○ |
| Conductive thin film was slightly separated, but there was no problem in practical use | Δ |
| Conductive thin film was markedly separated, and there was a problem in practical use | × |

Table 2 shows the type of the wire bar used in preparation of each of the conductive films in the evaluations according to above sections (1) to (4) and also the evaluation results (the surface resistivity, the total light transmission, the haze value, and the adhesion of the conductive films).

**Table 2**

| | Wire bar (No.) | Surface resistivity (Ω/□) | Total light transmission (%) | Haze value (%) | Adhesion |
|---|---|---|---|---|---|
| Ex.1 | 8 | 522 | 87.44 | 2.4 | O |
| Ex. 2 | 16 | 315 | 82.26 | 2.6 | O |
| Ex. 3 | 8 | 638 | 87.59 | 2.7 | O |
| Ex.4 | 8 | 679 | 87.72 | 2.7 | O |
| Ex. 5 | 8 | 740 | 87.32 | 2.9 | O |
| Com.Ex. 1 | 8 | 1.0×10⁸ | 43.35 | 4.3 | × |

### (5) Production of touch screen specimens

The touch screen specimens were produced by the following process.

The conductive films obtained in above section (1) were each used in production of a first conductive member 1. As shown in Fig. 2(a), tab electrodes 13 and 14 for leading out the wiring were attached to the vicinity of either end of one of the long sides of this first conductive member 1. Then, first electrodes 131 and 141 were formed on the surface of a first conducting layer 12. The first electrodes 131 and 141, which make a pair, were formed in a band in the vicinity of the short sides in the width direction of the first conductive member 1 so as to be connected to the tab electrodes 13 and 14, respectively. More specifically, these first electrodes were formed by application of a silver paste (ECM-100 manufactured by Taiyo Ink Mfg. Co., Ltd.) via a predetermined pattern mask followed by drying.

Then a glass substrate (70 mm × 100 mm; 1.1 mm thick) was prepared, in which one of the surfaces of the glass substrate was covered with an ITO conductive thin film, wherein the surface of the thin film was provided with 7 µm thick and 50 µm diameter dot spacers, and wherein the dot spacers were formed at predetermined intervals on the entire surface of the thin film. This glass substrate was used in production of a second conductive member 2. As shown in Fig. 2(b), tab electrodes 23 and 24 for leading out the wiring were attached to the vicinity of either end of one of the short sides of this second conductive member 2. Then, second electrodes 231 and 241 were formed on the surface of a second conducting layer 22. The second electrodes 231 and 241, which make a pair, were formed in a band in the vicinity of the side edges (long sides) in the longitudinal direction of the second conductive member 2 so as to be connected to the tab electrodes 23 and 24, respectively. The second electrodes also were formed using a pattern mask as is the case with the first electrodes.

Next, a double-sided adhesive tape was attached to the silver paste on the produced first conductive member 1 and second conductive member 2, and the first conductive member and the second conductive member were attached together such that the first electrodes of the first conductive member 1 are orthogonal to the second electrodes of the second conductive member 2, and thus, a touch screen specimen was obtained. It should be noted that the first conductive member 1 and the second conductive member 2 were insulated by the double-sided adhesive tape as described above.

### (6) Test for the degree of connection of touch screen specimens

A test for the degree of connection of the touch screen specimens obtained in above section (5) was conducted. The test was conducted according to the following procedure.

The substrate surface of the first conductive member of the touch screen specimen prepared above was touched (i.e., pressed) at 100 points with 50-g or 100-g loads, and the number in which electric current was allowed to pass was measured (counted). The measurement was performed by the use of a touch panel evaluation device manufactured by Touch Panel Laboratories Co., Ltd.. The obtained value was taken as the degree of connection (%). Table 3 shows the results.

### (7) Heat resistance test

The conductive films obtained in above section (1) were subjected to a heat resistance test according to the following procedure.

The conductive films were placed in an oven, wherein the temperature of the oven was adjusted to 95°C. After 100 hours, the surface resistivity of the conductive thin films of the conductive films was measured. The surface resistivity before heating (before the treatment) was taken as 1, and the value of the surface resistivity after the treatment was calculated. Table 3 shows the results.

### (8) Moisture and heat resistance test

The conductive films obtained in above section (1) were subjected to a moisture and heat resistance test according to the following procedure.

The conductive films were placed in a constant temperature and humidity chamber in which the temperature was adjusted to 60°C and the relative humidity was adjusted to 93% and held for 100 hours. The surface resistivity of the first conducting layers of the conductive films before the films were placed in the constant temperature and humidity chamber (before the treatment) was taken as 1, and the value of the surface resistivity after the treatment was calculated. Table 3 shows the results.

**Table 3**

| | Degree of connection (%) | Degree of connection (%) | Surface resistivity^{*1} | |
|---|---|---|---|---|
| | 50g load | 100g load | 95°C, 100 hours | 60°C,93%, 100 hours |
| Ex. 1 | 100 | 100 | 1.2 | 1.0 |
| Ex. 2 | 100 | 100 | 1.1 | 1.1 |
| Ex. 3 | 100 | 100 | 1.3 | 1.0 |
| Ex. 4 | 100 | 100 | 1.5 | 1.2 |
| Ex. 5 | 100 | 100 | 1.6 | 1.1 |
| Com.Ex.1 | 0 | 0 | 4.4 | 2.0 |

| | | | | |
|---|---|---|---|---|
| *1: Values calculated by taking the surface resistivity before the treatment as 1. | | | | |

As is clear from the results shown in Tables 2 and 3, when the complexes of poly(3,4-dialkoxythiophene) and a polyanion having a conductivity of 0.30 S/cm or more were employed (Examples 1 to 5), the touch screen specimens had a high transparency and the conductive films had a low surface resistivity, compared to those when the polyaniline having a conductivity of 8.0 × 10⁻⁶ S/cm was employed (Comparative Example 1). Furthermore, also in the heat resistance test and the moisture and heat resistance test, the degree of connection could be maintained at a high level.

### Industrial Applicability

The conductive resin composition of the present invention can be used as various materials having conductivity. In particular, the composition is used to form conductive thin films by applying the composition in the form of an aqueous dispersion or the like to the surface of various substrates. The conductive resin composition of the present invention or a conductive film having a thin film formed from the composition as a conducting layer can be preferably used for various input devices such as touch screens, various conducting films, capacitors, secondary batteries, connecting parts, polymeric semiconductor devices, antistatic materials such as antistatic films, displays, energy conversion devices, resists, and the like. Among these, the conductive resin composition or the conductive film is preferably used for touch screens, antistatic materials, and the like. When the conductive resin composition of the present invention is used as an antistatic material, the composition has the advantage that it can readily impart an antistatic capability even to a final product without affecting the appearance thereof.

The above-described conductive film of the present invention can be particularly preferably used in a resistive-type film switch. This resistive-type film switch shows excellent connection when a predetermined portion thereof is pressed, and the value of resistance of the conducting layer of this switch is not increased even after prolonged and repeated use. Furthermore, even when this switch is held under hot and humid conditions for a long period of time, an increase in the surface resistivity of the conductive film constituting the switch is suppressed. Thus, this resistive-type film switch has excellent reliability with respect to environmental changes and has a long life. Therefore, the resistive-type film switch can be preferably used in various devices, especially in touch screens and the like for which durability is required.

## Claims

1. A conductive resin composition comprising a complex of poly(3,4-dialkoxythiophene) and a polyanion,
wherein the complex has a conductivity of 0.30 S/cm or more.

2. The conductive resin composition of claim 1, wherein the complex of poly(3,4-dialkoxythiophene) and a polyanion is produced by a method comprising the step of polymerizing 3,4-dialkoxythiophene in the presence of the polyanion by using an oxidizing agent in an aqueous solvent.

3. A conductive film comprising a conducting layer formed on a transparent substrate,
wherein the conducting layer is formed by the use of the conductive resin composition of claim 1.

4. A resistive-type film switch comprising a first conductive member having a first conducting layer formed on a transparent substrate, a second conductive member having a second conducting layer formed on a substrate, and an insulative spacer,
wherein the first conducting layer is made of a thin film formed from the conductive resin composition of claim 1, the insulative spacer is provided on a part of the second conducting layer, and the first conducting layer and the second conducting layer are disposed facing each other.
